# EUROPEAN PATENT APPLICATION

(11) **EP 2 244 441 A1**
(43) Date of publication of application: **27.10.2010**
(21) Application number: 09290294.9
(22) Date of filing: 20.04.2009
(51) Int. Cl.: H04L 29/08

(54) **User profiling**

(71) Applicant: Alcatel Lucent, 75008 Paris (FR)
(72) Inventor: Robinson, David Cecil, Aldbourne, Wiltshire SN8 2NP (GB); Kisel, Andrey, Maidenhead, Berkshire SL6 8DH (GB); Clougherty, Mark Michael, Morris, NJ 07928 (US)
(74) Representative: Kensett, John Hinton

(57) **Abstract**

A method, in a communications network, of collecting profile data related to at least a first type of service a user is supplied with and making that data available to at least a second different type of service the user is supplied with over the network.

## Description

### Field of Invention

This invention relates to profiling of users of services delivered over networks and more particularly, but not exclusively, to profiling for the provisioning of IPTV (Internet Protocol Television), other Internet based TV services or other Internet services.

### Background

IPTV is now becoming more and more common and IPTV users or subscribers generally also use other services on a wider service delivery environment (SDE). The SDE includes multiple services which were previously perceived as unrelated, for example email services, worldwide web services, IP media subsystem (IMS) services and TV, amongst others. The SDE can share the same delivery network such as IP networks.

Worldwide web (www) service providers compete for users and may collect profiling data which enables website providers, for example, to create personalised service offers and services and to generate revenue from targeted advertising.

Individual service providers collect user profiling data by monitoring usage of their website. However, the profiling data is specific to each service provider. In general, each provider monitors usage data from a network location (eg IP address) and can use this information to determine a profile for a user at that address and then to target advertising. However, the profiling is limited to services offered by the particular site owners and also the ability to target advertising or personalise the service or promotions offered to that user is limited to the time when a user actually accesses a website. Each specific service provider obtains and stores its own profiling data.

Similarly, in the IPTV domain, a history of user service consumption and preferences can be obtained and stored in a particular user profile. This profile can later be used for personalising service offers or targeted advertising. However, this approach also has limitations because only services delivered via the IPTV provider (via IPTV middleware) can be included in the profiling.

Profiling done by each service provider is completely independent and unknown to providers of other services provided to the same consumer.

Often profiling information collected from each service domain, such as an Internet website or IPTV service provider, is incomplete and reflects only some user interests. Users may use the Internet for searches for new generic information, while using IPTV for entertainment, making any targeted advertising in relation to the entertainment domain inefficient.

Users often use different types of service for different purposes. Thus, a user may decide to make a particular purchase and may use a website to decide on their purchase or to compare items for sale. Presently, there is no way for an IPTV provider who provides IPTV service to the same user to determine that the user is interested in the products or services which he has conducted web searches for.

A further example is if a user of worldwide web and IPTV services is fond of the music of a particular artist and might purchase music from this artist over the Internet. This service provider from which he purchased the music has knowledge of interest in that music and can provide targeted advertising. However, the provider of that user's IPTV service has no knowledge of this, even though the provider may have TV content of that artist, perhaps a recorded concert, which may well be of interest to that user but the IPTV service provider has no means of knowing that the user might be interested in the specific content.

### Summary

The present invention arose in an attempt to provide improved profiling and use of profiling.

According to the present invention in a first aspect there is provided a method, in a communications network, of collecting profile data related to at least a first type of service a user is supplied with, and making that profile data available to at least a second service the user is supplied with.

The method may combine profiling across multiple sites and/or services into a single user profile available for different services. They therefore provide great flexibility and personalisation of various services.

The first service may be worldwide web browsing and/or searching.

The second service may be IPTV or other Internet TV media or service.

In an embodiment, when the user is a group of identities having at least a common identity and one or more sub-identities, profile data collected from at least one sub-identity is used to modify a profile related to the main identity.

The method may comprise the steps of extracting data indicative of a user's worldwide web browsing and/or searching; determining the identity of the user; collating the collected profiled data with the identity of the user, updating the profile data and providing the updated profile to apparatus for providing the second service.

In a second aspect, the invention provides profiling apparatus in a communications network, adapted to collect profile data related to the use of one type of service by one or more users, and to provide that data to suppliers of a different service supplied to said one or more users.

The apparatus may collect data related to worldwide web browsing and/or searching and the data is provided to an IPTV or other video and/or multimedia content providing service.

The apparatus may include a database adapted to store common and unique profiles for a group of associated users and means for updating the common profile and/or one or more unique profile with appropriate profile data for use in providing personalised content of the second type to that group of users or to one or more individual users within the group.

In embodiments, worldwide web searching by one or more users within a household may be used for TV personalisation and for targeting. Thus, IPTV content which is hopefully much more relevant to the particular user can then be delivered, to the benefit of both advertisers, content providers and the subscribers. Furthermore, methods such as deep packet inspection (dpi) may used, which are independent of specific worldwide web providers. Thus, IPTV user's profiles can be updated based upon use of multiple worldwide websites or sites belonging to multiple worldwide web providers.

Note that the term 'user identity' has a wide meaning; the user identity may be a reference to an identified user (or group of users) which is linked to personally identifiable information (PII), such as name, address, age. However, the identity may be an anonymous user personality, eg derived from the user behaviour when visiting multiple websites or from user behaviour when consuming IPTV, which is not linked to personally identifiable information (PII), such as 'personality interested in news, action moves and cars'. The suggested methods can be applied either when an authenticated user identity is used, or when unauthenticated (eg anonymous) user personality is used, or for any combination of these for any combination of these.

### Brief Description of the Figures

Some embodiments of apparatus and/or methods in accordance with embodiments of the present invention will now be described, by way of example only, with reference to the accompanying schematic drawings, in which:
Figure 1 shows parts of a network; and
Figure 2 shows part of a network and software applications.

### Description of Embodiment

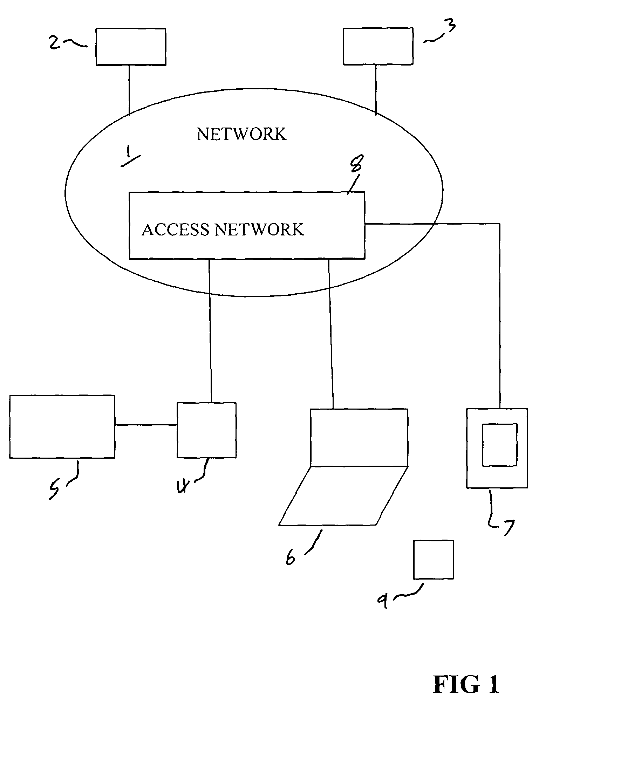

Figure 1 shows schematically some components of a communications network. A generalised 'network' 1 is shown and this might be the Internet for example, although it could alternatively be a wide area network or a local area network or other type of wire-line or wireless network. Many service providers provide their services on this and two of them are schematically shown, the worldwide web 2 and an Internet protocol television (IPTV) system 3. The general functioning of these and other services are well-known in themselves.

It is common for users of such services to have a number of different ways of accessing the Internet or other services, often over a single common access network or using several different access networks. In the figure, several terminal devices are shown, which are associated with a particular user or group of users (such as a family). These comprise a set top box 4 connected to a TV set 5, a desktop or laptop computer 6 and a mobile telephone 7. The set top box 4 is used to provide IPTV services in this embodiment to the user which are displayed on TV 5. The computer 6 might be used for worldwide web access, email, etc, although these services could of course be also provided through the set top box 4. Conversely the computer could be used for IPTV services. The mobile telephone is connected to a mobile telephone network (not shown) or may be connected via a femto cell to the access network and of course can also access the Internet for web browsing, email and multimedia or other services. The terminals are connected to the Internet via an access network 8. This may include a DSL line or various routers and modem, connecting element between the mobile network and the Internet and so on.

The user of the various terminal devices may probably also have a home landline telephone which might also connect over the same access network and this is shown schematically at 9.

In embodiments, the worldwide web usage of the user, or members of the group of users at that location, is monitored and used to determine a profile by means such as a keywords extractor or other means and this profiling is then used for driving IPTV personalisation via the IPTV provider 3 and its sub-networks. In this way, worldwide web targeted advertising can be made to IPTV users.

Essentially, worldwide web profiling is associated with one or more IPTV user profiles in a converged profile environment and this enables better personalisation of the IPTV content delivered to the users. Note that although worldwide web and IPTV are used as examples, the profile convergence and sharing may be used across other platforms and types of services.

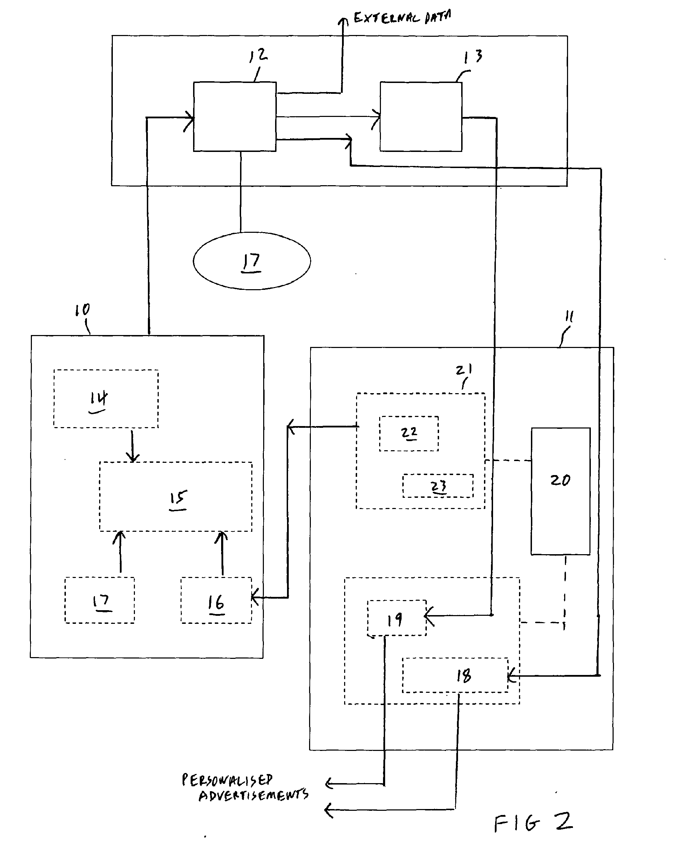

Referring now to Figure 2, reference numeral 10 relates generally to the service node or applications which are available or done at the access network 8. Reference numeral 11 relates to IPTV middleware. These collections are arbitrary and are intended for explanatory use only. The figure also shows a common profiling engine 12 and an advertising server 13 provided with means for determining and analysing the IPTV and www profiles.

Profile data, such as www profile data, is typically obtained at node 10 by any convenient method. This may be by using deep packet inspection (DPI) for example analysing HTTP, FTP or other control messages passing through the common access network to user equipment 4, 6 or 7 for example. This information is collated and applied to the common profiling engine 12 with acts upon the advertising server 13 to insert personalised or appropriate add to the IPTV content dispatched or available to the user.

More specifically, in a typical example, the user searches the Internet, perhaps using their computer 6 or mobile telephone 7. A keyword extractor 14 uses deep packet inspection or other techniques to determine relevant keywords and to determine details of what the user is searching for. These are passed to a profiling agent 15. Instead of a profiling agent, this may be a presence agent. The profiling agent 15 determines the identity of the user from a common ID database 16, which is connected to the IPTV service 11. The profiling agent 15 also is connected to an IPTV profile application 17, which receives suitable information from the set top box 4 for example, or extracts user profiles by monitoring IPTV control messages, such as Internet Group Management Profile (IGMP) or Real Time Streaming Protocol (RTSP) messages. The profiling agent 15 reports the profile it has received from profiling application 7, together with the keywords received from extractor 14 to the common profiling engine 12. This may also be known as an application server.

Note that resolution or association profiling information to a particular user (either authenticated or personality band) can be performed by the profiling engine 12 itself

The profiling engine 12 may contain a database or other means of storing previous user state, such as previous IPTV content viewed by that particular user, www searches, and so on. It then provides data to the advertising server 13 and also to other sources whether internal to the network or external, for example this might be data provided to external advertising campaign providers or managers so that originators of particular advertising material can determine the extent to which their advertising is actually being used, or the types of information which is being requested by users. Note that the figure also shows that other applications, such as IMS (IP multimedia system) 17 can be applied to the profiling engine.

Accordingly, a record is built up of the user's web searching habits and this can be delivered to external sources 18, to the advertising server 13 or directly to the IPTV platform 11.

The above is a general description of a typical profile extraction method. The profile data can then be used as follows in a consumption mode.

Firstly, the user, via set top box 4 for example, activates an IPTV application such as an electronic program guide (EPG grid) or a broadcast TV (BTV) catalogue from an IPTV application 19 in the IPTV middleware. This application then requests personalised advertisements from the advertising server 13. This might alternatively be done directly from a recommendation engine. The advertising selection server 13 selects an advertisement based upon the user profile which has been given to it. For example, if the user has just searched the Internet for a particular brand of car and the manufacturer of that car brand has recently introduced a new promotion or advertisement which is available to the advertising server, then the advertising server will return this advertisement to the IPTV system for transmission to that user. Thus, a targeted advertisement is distributed to the IPTV user based upon his worldwide web browsing. The IPTV application 19 then displays this advertisement to the user via his set top box.

Alternatively, or additionally, personalised applications other than advertisements can be transmitted directly to the user by personalised application engine 18 at the IPTV middleware 11 using a profile from the profiling engine.

This may be personalised content or even perhaps targeted messages, links to other content or others. In some embodiments, a personalised application engine could be a video server or video cache delivering personalised content to end users.

The personalisation applications are provided by an IPTV server 20, which may be a single server or number of servers and other devices. This also provides a central database 21, comprising an user ID database 22 and an IPTV profile database 23. These store details of individual users and groups of users and information from this user database 21 is applied to the common ID application 16 at the access network.

In an alternative embodiment, IPTV user IDs and/or associated profiles may be stored directly in profiling engine 12. The profile can be authenticated or unauthenticated.

Embodiments also extend to common identity mapping. That is, a group of people, most typically a family or household, or perhaps a group of work colleagues, may share a common profile, although they may each have their own identity or sub-identity within that profile. Taking a family group as an example, the following situation may apply:
The Smith family subscribe to an IPTV service 3 via a fictional provider 'TV World' and may receive IMS mobile telephony and landline telephony services from a company 'Good Communications'. The Smith family has a single landline (ADSL line for example) and each of the family members have a separate mobile telephone number, for example:
   1. Smith family: 973-555-1111
   2. Bob Smith (mobile): 973-555-2111
   3. Sally Smith (mobile): 973-555-2112
   4. Jill Smith (mobile): 973-555-2113 (who prefers user name 'funkid')

The Smith family has a single IPTV account with TV World (account number 'Smith 1234') and the TV World service provides creates several standard user profiles for the Smiths based on data provided when the Smith family initially signed up for IPTV.

These profiles contain data that associates each IPTV user with an associated IMS telephone number (if desired) and may also provide an indication of whether profiling should be reported for this user. That is, some users can choose not to have profiling done for them or this selection could be done by the operator or a mixture of these. Also, the Smith family may be able to add, delete and modify user profiles. Typically, however, the default profile will not be able to be deleted (unless or until the Smith family ceases their subscription to the service). The various user profiles of the Smith family will therefore be configured as follows:
1. Smith 1234 (master profile): location = Node 32/ Port 21, URL = +19735551111@CommsRus, presence =Y
2. Bobsmith.smith 1234: URI = +19735552111@CommsRus, presence = Y
3. Sally.smith 1234: URI = +19735552212@CommsRus, presence = N
4. Funkid.smith 1234: URI = +19735552113@CommsRus, presence Y
5. parents.smith 1234: members = bobsmith.smith 1234, sally.smith 1234
6. children.smith 1234: members funkid.smith 1234

Presence is used to determine whether a user is 'actively' available, as is well-known.

When a member of the family conducts a www search, via their computer 6, set top box 4 or mobile telephone 7. For example, this is used to update the various profiles in the system. If no identity has been indicated or determined, then the default family identity 'smith 1234' is used for profiling the whole household. This may be for example a URL of +1973555111@GoodCommunications.com.

The profile is done by the profiling agent 14 sending data to the profiling engine 12 which then revises the common profile and/or individual profile accordingly. The revised profile data is then used as an input to the add server 13 or directly to the IPTV service 11 to cause personalised advertising and/or content to be delivered either generally to the household or to a specific.

The profile data may include indication of time, such as time stamping, to determine how recently www searches were conducted so that only recent interests of users are taken into account when delivering personalised content and/or determine a timeline. It may also take into account longer term records of searches made or other content requested to determine historical trends or for other purposes. Many other analyses and uses may be made to or of the profile data.

Note that the embodiment shown (as an example only) applies to authenticated users. A discussed above, similar techniques and methods can be used with unauthenticated users.

User identifies may be authenticated or unauthenticated or a combination of both. For example, in a group some user IDs or sub-IDs may be authenticated whereas others are unauthenticated (eg behavioural based).

The description and drawings merely illustrate the principles of the invention. It will thus be appreciated that those skilled in the art will be able to devise various arrangements that, although not explicitly described or shown herein, embody the principles of the invention and are included within its spirit and scope.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects and embodiments of the invention, as well as specific examples thereof, are intended to encompass equivalents thereof.

## Claims

1. A method, in a communications network, of collecting profile data related to at least a first type of service a user is supplied with and making that data profile available to at least a second different type of service the user is supplied with over the network.

2. A method as claimed in Claim 1, wherein the first service is a web browsing and/or searching service.

3. A method as claimed in Claim 1 or Claim 2, wherein the second service is an IPTV service.

4. A method as claimed in any preceding claim, wherein a profiling apparatus is used to collect profiling data related to usage by a user of the first service, the collected profile data is used to modify a profile of that user and a modified profiled is used by the provider of the second service to provide targeted and/or personalised content to the user.

5. A method as claimed in any preceding claim, wherein when the user is a group of identities having at least a common identity and one or more sub-identities, profile data collected from at least one sub-identity is used to modify a profile related to the main identity.

6. A method as claimed in Claim 5, wherein the identity or identities are authenticated or unauthenticated identities or a combination of both.

7. A method of collecting profile data as claimed in any preceding claim, comprising the steps of extracting data indicative of a user's worldwide web browsing and/or searching; determining the identity of the user; collating the collected profiled data with the identity of the user and updating the profile data and providing the updated profile to apparatus for providing the second service.

8. A method as claimed in Claim 7, further comprising, when the user or an associated user requests the second service, using the collected profile data to provide personalised and/or targeted content and/or advertisements to the user using the second service.

9. Profiling apparatus for use in a communications network, adapted to collect profile data related to the use of one type of service by one or more users and to use that data for a different type of service supplied over the same network to said one or more users.

10. A profiling apparatus as claimed in Claim 9, comprising an access network.

11. Apparatus as claimed in Claim 9 or Claim 10, comprising a profiling means adapted to receive profile data related to a user's use of the first server, and means for using the profile data obtained by the profiling means to provide updated profiling information to the second service.

12. Apparatus as claimed in any of Claims 8 to 11, wherein the first service is worldwide web browsing and/or worldwide web searching and the second service is IPTV.

13. Apparatus as claimed in Claim 11, wherein IPTV and worldwide web profile data is used to modify the profile of one or more users and comprising means for using the profile to provide personalised content and/or advertisement to those users.

14. Apparatus as claimed in Claim 13, comprising a common profiling engine, an advertising server and an IPTV server for distributing IPTV content to users.

15. Apparatus as claimed in any one of Claims 9 to 14, including a database adapted to common and unique profiles for a group of associated users and means for updating the common profile and/or the unique profile with appropriate profile data for use in providing personalised content of the second type to that group of users or to that individual user within the group.
